# EUROPEAN PATENT SPECIFICATION

(11) **EP 2 887 048 B1**
(45) Date of publication and mention of the grant of the patent: **18.08.2021**
(21) Application number: 14382484.5
(22) Date of filing: 01.12.2014
(51) Int. Cl.: G01N 3/30

(54) **Pendulum device for low-energy impact testing**
Pendelvorrichtung für energiearme Stoßtests
Dispositif pendulaire pour test d'impacts à basse énergie

(30) Priority: 23.12.2013 ES 201331897
(43) Date of publication of application: 24.06.2015
(73) Proprietor: Fundación Centro de Tecnologias Aeronáuticas, 01510 Miñano Alava (ES)
(72) Inventor: Salgado Garrido, Miguel Angel, 01510 Miñano - Alava (ES); Guerediaga García, Jon, 01510 Miñano - Alava (ES); Piñan Alonso, Javier, 01510 Miñano - Alava (ES); Espinoza Ruiz De Eguilaz, Aitor, 01510 Miñano - Alava (ES); Madruga Angulo, Oscar, 01510 Miñano - Alava (ES); Ruiz De Gaona Corres, Sergio, 01510 Miñano - Alava (ES); Calvo Garrido, José María, 01510 Miñano - Alava (ES); Fernández Murgiondo, Etor, 01510 Miñano - Alava (ES); Goñi Imízcoz, Ignacio, 01510 Miñano - Alava (ES); Eiriz Gervás, Ignacio, 01510 Miñano - Alava (ES); Sáez De Ocáriz, Idurre, 01510 Miñano - Alava (ES)
(74) Representative: Clarke Modet & Co.

(56) References cited:
- US-A- 3 583 215
- US-A- 5 003 811
- US-A1- 2004 103 713

## Description

### Field of the invention

The present invention falls within the field of tests carried out using a pendulum that impacts a specimen. Specifically, the impact device consists of a pendulum with a system of variable weights that are placed at different positions on the arm in order to make the system more flexible in terms of the impact energies that may be established. Said device is provided with a braking system that makes it possible to control the impact height once the energy to be used for the impact has been defined. This braking system likewise prevents rebounding after impact.

### Background of the invention

In the current state of the art, pendulum-type impact devices are mostly used to carry out destructive testing of materials. These are the pendulums for carrying out characterizations of materials using the Charpy method, which measures a specimen's resistance to breakage when it is impacted using a pendulum with a hammer at its tip. The hammer is instrumented and the device has a data acquisition system.

The state of the art is represented by several inventions, of which the following stand out. US5003811 discloses a mobile impact tester for testing beams, which performs impact tests on a beam. The impact tester can be moved to the location of the test. A braking system is provided that prevents rebound of the hammer.

Patent ES 2301290 describes a testing pendulum that has a modular design, with an arm that is actuated by a reduction motor, and is characterized in that it is actuated by activating an electromagnet that releases the mass arranged at the end of the arm. Utility model CN 201242519 presents a Charpy pendulum whose main feature is the support plate that holds the actuators of the pendulum. This plate is necessary given the large size of the pendulum.

In any case, this and other pendulum devices do not suitably solve the problems associated with the placement of the specimen when evaluating large pieces, or problems having to do with using different types of arms and different types of masses to determine the best inertia. Another problem that remains unsolved is the mass rebounding after it impacts the specimen, or braking the pendulum before and after its run so that the specimen is not damaged further if it breaks.

The striker of the present invention has been developed to resolve this and other problems.

### Description of the invention

One object of the invention is to establish various testing parameters based on the type of material and the notch of the hammer, providing the pendulum with a single arm designed so that the mass of the notch may be moved along it and placed at different positions.

Another object of the invention is for the brake to be pneumatic, arranged around the shaft, and for its instant action to offer better performance against impacts and prevent the effects of rebounding after hitting the specimen.

Another object of the invention is for the pendulum to be provided with a base plate that can adapt to any arrangement, be it horizontal, vertical, inclined, or even on the specimen itself.

Lastly, another object of the invention is for the test method to be provided with the control systems necessary in order to, together with the brake, prevent any irreparable damage to the specimen.

The brake is made up of two brake disks joined to the shaft and two pneumatic calipers. Pneumatic systems are more energy efficient and smaller in size than electric braking systems. The calipers have been arranged so that they are anchored to the base plate wings in order to leave the base plate free, so that it can easily be fastened to any surface.

As for the arm and the mass, the mass moves and may be fixed along the length of the arm according to the impact energy required. The mass is joined firmly to the arm via a joining bolt that runs through both of them. In this way they both move together in a single motion. The notch is screwed into the mass. It is an interchangeable tip that makes it possible to modify the impact geometry.

The design of the base plate allows it to be set up anywhere: on the floor, wall or ceiling, and even on the specimen itself, which is ideal for large-sized specimens. Other similar systems studied to date are meant to impact small-sized test samples or specimens that are placed on the pendulum device itself. In the present case, the purpose is to meet the need of expanding the range and type of specimens that can be impacted. This includes airplane wings, ships, etc., i.e. elements that cannot be taken to a test facility and which require a system that can be installed in the desired position.

The advantages of the invented device are:
Establishing different testing parameters depending on the type of material, as a result of the use of different masses that can be fixed at different positions, allowing the inertia of the pendulum to be changed in a simple manner.

Flexibility in terms of its use, easily adapting to different places to which it may be fixed, since it is a portable device.

The ability to adapt to any testing place through the use of an efficient pneumatic braking system.

### Brief description of the drawings

What follows is a very brief description of a series of drawings that aid in better understanding the invention, and which are expressly related to an embodiment of said invention that is presented by way of a non-limiting example of the same.
Figure 1 shows a perspective view of an embodiment of the invention.
Figure 2 shows another view of the invention in order to offer a complete picture of the same, showing the elements that cannot be seen clearly in Figure 1.
Figures 3 and 4 show examples of joining the impact system to a test stand.

### Detailed description of the invention

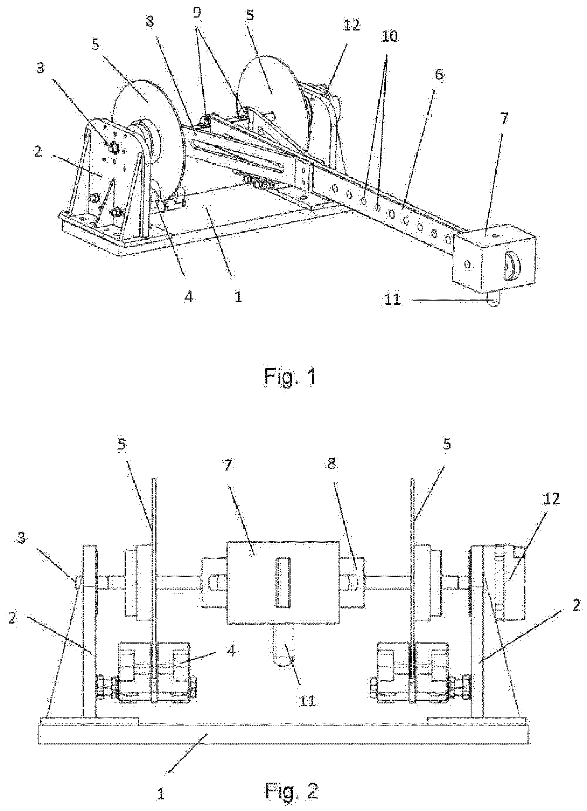

Figures 1 and 2 show the base of the base plate (1) that is totally flat in order to facilitate fixing it to any surface. Different types of fixing means may be used; magnetic or clamp-based fastening means are acceptable, in addition to simple screw joints. The system for joining the base plate is established depending upon the specimen to be impacted. At the ends of said base plate (1) are arranged the wings (2) of the base plate, where the rotation shaft (3) and the brake calipers (4) are mounted. Mounting the wings (2) takes up a very small amount of the surface of the base plate (1), leaving most of the surface free.

The brake disks (5) are supported by the shaft (3) and are arranged next to the wings (2) of the base plate. The arm (6) that ends in a mass (7), all together constituting the pendulum, is also fixed to the rotation shaft (3). The joining of the arm (6) to the shaft (3) is consolidated with oblique supports (8), and in the portion of the shaft (3) that joins to the arm (6) and the two oblique supports (8), its cylindrical design changes to a rectangular design where the joints (9) are made.

The arm (6) has holes (10) in its surface marking the different positions where the mass (7) can be placed and then fixed with a bolt running through both elements (not shown in the figure). The various positions that the mass (7) can adopt increase the flexibility of the system, as the different impact energies are achieved by shifting the mass (7). The tip of the striker (11) is an interchangeable tip that is joined to the mass (7) by means of a threaded joint. Its function is to achieve different impact indentation geometries through a minor change.

The angle transducer (12) is also connected to the shaft (3) via the outer portion thereof and makes it possible to measure the angle of the pendulum's swing.

The calipers (4) are only supported by the wings (2) without being supported on the base plate (1), thereby leaving as much of the surface free as possible. The break is pneumatic and is activated whenever the control so requires.

The method for using said pendulum device solves the problems that may arise when carrying out all manner of with this device. The method followed when using it is as follows:
Capturing and recording the input data:
- The angle of the surface to be impacted, measured with an inclinometer.

This may be any angle: from 90° to -90° with respect to horizontal.
- The energy of the impact to be carried out on the specimen. This is one of the characteristics of the impact.

Carrying out the impact:
- With the value of the surface incline and the impact energy, the angle that the device should be raised to is calculated. Since the system has intentionally been made as light as possible, there is no raising motor and the arm (6) with the mass (7) is raised manually. The software associated with the device automatically brakes the pendulum when it has reached the desired angle.
- A push-button is used to release the arm and carry out the impact.
- The system control brakes the device once it has carried out the impact. It is detected when the swing of the device switches direction after the impact. The brake is automatically activated to prevent a second impact (rebound).
- A safety system is also provided to prevent damage to the specimen if the selected energy is too high. If the angle goes past the impact angle so that the body of the mass (7) could strike the specimen, the brake is activated before this takes place. The object of this device is to cause controlled damage to the specimen, but by no means to cause breakage or excessive damage thereof.

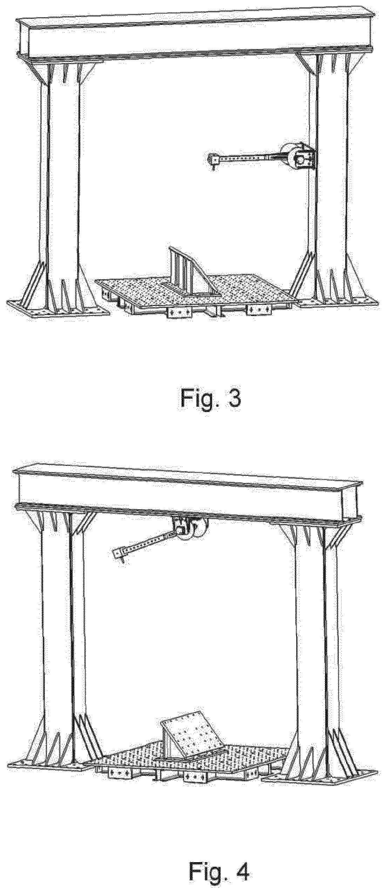

Figure 3 shows a practical embodiment of the invention wherein the device is anchored to one of the columns of a test frame.

Figure 4 shows a second practical embodiment wherein the device is fixed to the actual beam of the structure.

## Claims

1. A pendulum device for low-energy impact tests, of the type used to assess materials using the Charpy method, that includes a base plate upon which wings are erected that house the rotation shaft, arm and breaking system,
- the base plate (1) has an entirely even and accessible surface and the wings (2) arranged at the ends thereof support the rotation axis (3),
- the arm (6) connected to the rotation axis (3) has through holes (10) and a mass (7) that slides along the arm (6) and is fixed thereto,
- the breaking system is a pneumatic brake whose calipers (4) are anchored to the wings (2) and the disks (5) on the rotation axis (3), both the disks (5) and the calipers (4) of the pneumatic brake being situated on the inner face of the wings (2), and
- it has a control system connected to the brake through an angle transducer (12) arranged on the rotation axis (3), which prevents a striker (11) arranged on the mass (7) from rebounding and from perforating a specimen that is to be impacted,
- it has fixing means of the base plate (1) outside the wings configured to arrange said base plate (1) on the specimen.

2. The pendulum device for low-energy impact testing according to claim one, **characterized in that** it is provided with a push-button to release the pneumatic brake and a control system to activate said pneumatic brake when the angle transducer (12) detects that a certain angle has been passed or that the angle of the mass has changed (7).

3. The pendulum device for low-energy impact testing according to claim one, **characterized in that** the rotation shaft (3) is cylindrical in the portion corresponding to the wings (2) and the brake disks (5), and transitions to a rectangular shape where it joins to the arm (6) and to support points (8) that reinforce said arm (6).

4. The pendulum device for low-energy impact testing according to claim one, **characterized in that** the arm (6) and the mass (7) are joined together by means of a bolt, and the mass (7) has a striker (11) that may be interchanged by means of threading on the tip.

5. The pendulum device for low-energy impact testing according to claim one, **characterized in that** the different fixing means of the base plate (1) outside the wings (2) enable it to be arranged horizontally, vertically or inclined.

## Patentansprüche

1. Pendelvorrichtung für energiearme Stoßtests des zur Prüfung von Werkstoffen nach der Charpy-Methode verwendeten Typs, umfassend eine Grundplatte mit aufgesetzten Flügeln, auf denen Drehwelle, Arm und Bremssystem sitzen,
- die Grundplatte (1) weist eine gänzlich ebene und gut zugängliche Oberfläche auf, und die an ihren Enden angeordneten Flügel (2) dienen zur Aufnahme der Drehachse (3),
- der mit der Drehachse (3) verbundene Arm (6) besitzt Durchgangslöcher (10) und eine am Arm (6) entlang verschiebbare und an diesem befestigte Masse (7),
- das Bremssystem besteht aus einer pneumatischen Bremse, deren Bremsbacken (4) an den Flügeln (2) und den Scheiben (5) auf der Drehachse (3) angebracht sind, wobei sowohl die Scheiben (5) als auch die Bremsbacken (4) der pneumatischen Bremse an der Innenseite der Flügel (2) angeordnet sind, und
- die Vorrichtung besitzt ein Kontrollsystem, das über einen auf der Drehachse (3) angeordneten Winkelgeber (12) mit der Bremse verbunden ist und verhindert, dass ein auf der Masse (7) angeordneter Schlagkörper (11) zurückprallt und eine zu bearbeitende Probe durchstößt,
- die Vorrichtung weist außen an den Flügeln Befestigungsmittel der Grundplatte (1) auf, die zum Anbringen der genannten Grundplatte (1) auf der Probe ausgebildet sind.

2. Pendelvorrichtung für energiearme Stoßtests nach Anspruch 1, **dadurch gekennzeichnet, dass** sie mit einem Drucktaster zum Lösen der pneumatischen Bremse ausgestattet ist und ein Kontrollsystem besitzt, das die genannte pneumatische Bremse betätigt, wenn der Winkelgeber (12) erfasst, dass ein bestimmter Winkel überschritten wurde oder sich der Winkel der Masse (7) geändert hat.

3. Pendelvorrichtung für energiearme Stoßtests nach Anspruch 1, **dadurch gekennzeichnet, dass** die Drehwelle (3) in dem den Flügeln (2) und den Bremsscheiben (5) entsprechenden Bereich zylindrisch ist und an der Verbindungsstelle mit dem Arm (6) und den den genannten Arm (6) verstärkenden Stützpunkten (8) in eine rechteckige Form übergeht.

4. Pendelvorrichtung für energiearme Stoßtests nach Anspruch 1, **dadurch gekennzeichnet, dass** der Arm (6) und die Masse (7) durch einen Bolzen miteinander verbunden sind und die Masse (7) einen Schlagkörper (11) aufweist, der über ein Gewinde an der Spitze ausgewechselt werden kann.

5. Pendelvorrichtung für energiearme Stoßtests nach Anspruch 1, **dadurch gekennzeichnet, dass** die unterschiedlichen Befestigungsmittel der Grundplatte (1) außen an den Flügeln (2) deren horizontale, vertikale oder schräge Anordnung ermöglichen.

## Revendications

1. Dispositif à pendule pour essais de chocs à faible énergie, du type de ceux utilisés pour évaluer les matériaux selon la méthode Charpy, qui comprend une plaque de base sur laquelle sont érigées des ailes qui abritent l'axe de rotation, le bras et le système de rupture,
- la plaque de base (1) présente une surface entièrement plane et accessible et les ailes (2) disposées à ses extrémités supportent l'axe de rotation (3),
- le bras (6) relié à l'axe de rotation (3) présente des trous traversants (10) et une masse (7) qui coulisse le long du bras (6) et y est fixée,
- le système de freinage est un frein pneumatique dont les étriers (4) sont ancrés aux ailes (2) et aux disques (5) sur l'axe de rotation (3), les disques (5) et les étriers (4) du frein pneumatique étant situés sur la face interne des ailes (2), et
- il possède un système de commande relié au frein par l'intermédiaire d'un transducteur d'angle (12) disposé sur l'axe de rotation (3), qui empêche un percuteur (11) disposé sur la masse (7) de rebondir et de perforer un spécimen à frapper,
- il comporte des moyens de fixation de l'embase (1) à l'extérieur des ailes, configurés pour disposer ladite embase (1) sur l'éprouvette.

2. Dispositif à pendule pour essai de choc à faible énergie selon la revendication 1, **caractérisé en ce qu'il** est muni d'un bouton-poussoir pour libérer le frein pneumatique et d'un système de commande pour activer ledit frein pneumatique lorsque le transducteur d'angle (12) détecte qu'un certain angle a été dépassé ou que l'angle de la masse a changé (7).

3. Dispositif à pendule pour essai de choc à faible énergie selon la revendication 1, **caractérisé en ce que** l'arbre de rotation (3) est cylindrique dans la partie correspondant aux ailes (2) et aux disques de frein (5), et passe à une forme rectangulaire où il se joint au bras (6) et aux points de support (8) qui renforcent ledit bras (6).

4. Dispositif de pendule pour essai de choc à faible énergie selon la revendication 1, **caractérisé en ce que** le bras (6) et la masse (7) sont reliés ensemble au moyen d'un boulon, et la masse (7) a un percuteur (11) qui peut être interchangé au moyen d'un filetage sur la pointe.

5. Dispositif pendulaire pour essai de choc à faible énergie selon la revendication 1, **caractérisé en ce que** les différents moyens de fixation de la plaque de base (1) à l'extérieur des ailes (2) permettent de le disposer horizontalement, verticalement ou de manière inclinée.
